# EUROPEAN PATENT SPECIFICATION

(11) **EP 0 327 228 B1**
(45) Date of publication and mention of the grant of the patent: **29.03.1995**
(21) Application number: 89300578.5
(22) Date of filing: 20.01.1989
(51) Int. Cl.: H04N 5/08

(54) **Sync pulse separation circuitry**
Synchronimpuls-Abtrennschaltung
Circuit de séparation d'impulsion de synchronisation

(30) Priority: 22.01.1988 JP 13116/88
(43) Date of publication of application: 09.08.1989
(73) Proprietor: FUJITSU LIMITED, Kawasaki-shi, Kanagawa 211 (JP)
(72) Inventor: Aoki, Tetsuo, Kawasaki-shi Kanagawa 211 (JP); Asami, Fumitaka, Kunitachi-shi Tokyo 186 (JP)
(74) Representative: Fane, Christopher Robin King

(56) References cited:
- GB-A- 2 151 422
- US-A- 4 491 870
- US-A- 4 675 734
- U. TIETZE et al.: "Halbleiter-Schaltungstechnik", 5th edition, 1980, pages 170-171, Springer-Verlag, Berlin, DE
- PATENT ABSTRACTS OF JAPAN, vol. 7, no. 233 (E-204)[1378], 15th October 1983;& JP-A-58 121 870
- PATENT ABSTRACTS OF JAPAN, vol. 7, no. 233 (E-204)[1378], 15th october 1983; & JP-A-58 121 871

## Description

The present invention relates to synchronous separation circuitry, for example for use in a television video circuit. In general, a raster scanning method is widely employed in television video circuitry, for example, and in this method, an image is separated by a plurality of scanning lines and each of the scanning lines is processed in a time-series. As is well known, there are two types of raster scanning method; a non-interlace scanning type and an interlace scanning type, and in both types, the synchronizing signal must be used for scanning the image as a reference signal. Note, a horizontal synchronizing signal is used as the scanning reference signal for the horizontal direction and a vertical synchronizing signal is used as the scanning reference signal for the vertical direction.

A synchronous separation circuit is usually located after a video amplification stage in the television video circuit, and is used for separating the composite synchronizing signal from a composite video signal, and for further separating the horizontal synchronizing signal and the vertical synchronizing signal from the opposite synchronizing signal.

The horizontal synchronizing signal and the vertical synchronizing signal are input to a deflection circuit having horizontal deflection and vertical deflection circuits, and the output of the deflection circuit is sent to horizontal and vertical deflection coils.

Conventionally, a differential circuit is provided for obtaining the horizontal synchronizing signal and an integrating circuit is provided for obtaining the vertical synchronizing signal from the composite synchronizing signal. These differential and integrating circuits are usually constituted by resistors and capacitors, and the horizontal and vertical synchronizing signals are obtained from the composite synchronizing signal through the resistors and capacitors based on an analogue signal processing technique. Namely, the differential circuit is a high-pass filter and the integrating circuit is a low-pass filter.

Problems occur, however, in the analogue signal processing techniques used in these circuits, as explained in detail hereinafter.

A useful improvement would lie in providing a synchronous separation circuit enabling the separation of horizontal and vertical synchronizing signals from a composite synchronizing signal, based on a digital signal processing technique.

In one proposal for implementing such a circuit using digital signal processing techniques, described in GB-A-2151422, digital video-signal processing circuitry, for deriving respective horizontal and vertical synchronizing signals from a composite synchronizing signal, comprises: a clock signal generator for generating a train of clock pulses of a frequency higher than the horizontal synchronizing signal frequency; a pulse detector arranged to detect a horizontal synchronizing pulse in the said composite synchronizing signal and thereupon to trigger counting means of the circuitry, to commence counting a first predetermined number of the said clock pulses, and also to trigger a first output stage of the circuitry so as to cause that stage to generate a horizontal synchronizing pulse which is terminated on completion of the said counting; and a pulse discriminator arranged to determine whether or not pulses in the said composite synchronizing signal are vertical synchronizing pulses of pulse width equal to or greater than a selected minimum value and to cause a second output stage of the circuitry to generate a vertical synchronizing pulse at an output separate from that of the said first output stage. In this proposal the pulse discriminator generates a trigger pulse, for triggering the second output stage to generate a vertical synchronizing pulse, if any pulse in the composite synchronizing signal exceeds 17»s in width, so that the circuitry generates respective vertical synchronizing pulses in response to vertical synchronizing pulses in the composite synchronizing signal.

In another proposal, described in US-A- 4675734, the synchronous separation circuitry is capable of adapting automatically to different video signal formats, but the circuitry is particularly complex and needs to receive a start pulse of a duration greater than or equal to the vertical blanking interval.

According to the present invention there is provided digital video-signal processing circuitry, for deriving respective horizontal and vertical synchronizing signals from a composite synchronizing signal, comprising: a clock signal generator for generating a train of clock pulses of a frequency higher than the horizontal synchronizing signal frequency; a pulse detector arranged to detect a horizontal synchronizing pulse in the said composite synchronizing signal and thereupon to trigger counting means of the circuitry, to commence counting a first predetermined number of the said clock pulses, and also to trigger a first output stage of the circuitry so as to cause that stage to generate a horizontal synchronizing pulse which is terminated on completion of the said counting; and a pulse discriminator arranged to determine whether or not pulses in the said composite synchronizing signal are vertical synchronizing pulses of pulse width equal to or greater than a selected minimum value and to cause a second output stage of the circuitry to generate a vertical synchronizing pulse at an output separate from that of the said first output stage (31); characterised in that the circuitry further includes a sampling pulse generator arranged to generate a sampling pulse in response to each pulse in the said composite synchronizing signal, each sampling pulse being delayed with respect to its corresponding pulse in the composite synchronizing signal by a preset period determined by operation of the said counting means and being employed to determine a sampling instant, after the end of the said corresponding pulse if that pulse is not one of the said vertical synchronizing pulses in the composite signal but before the said end if that pulse is one of those vertical synchronizing pulses, at which the said composite synchronizing signal is sampled; and in that the said pulse discriminator is arranged to determine, on the basis of whether or not the said corresponding pulse in the composite synchronizing signal is still persisting at the sampling instant concerned, whether or not the said corresponding pulse is one of the said vertical synchronizing pulses, and to cause the said second output stage of the circuitry to generate a single vertical synchronizing pulse of a pulse width substantially equal to the interval from the leading edge of the first vertical synchronizing pulse, in the composite synchronizing signal, that follows a narrow pulse therein, of a pulse width less than the said selected minimum value, to the leading edge of the first such narrow pulse following that first vertical synchronizing pulse in the composite synchronizing signal.

Reference will now be made, by way of example, to the accompanying drawings, in which:
Fig.1 is a circuit diagram illustrating the principles of a conventional horizontal synchronous separation circuit;
Fig. 2 shows input and output waveforms of the circuit shown in Fig. 1;
Fig. 3 is a circuit diagram illustrating the principles of a conventional vertical synchronous separation circuit;
Fig. 4 shows input and output waveforms of the circuit shown in Fig. 3;
Fig. 5 is a basic block diagram of a synchronous separation circuit embodying the present invention;
Fig. 6 is a circuit diagram of a synchronous separation circuit according to an embodiment of the present invention; and
Fig. 7 is a signal timing chart for explaining operation of the circuit shown in Fig. 6.

Before describing preferred embodiments, an explanation will be given of conventional horizontal and vertical synchronous separation circuits.

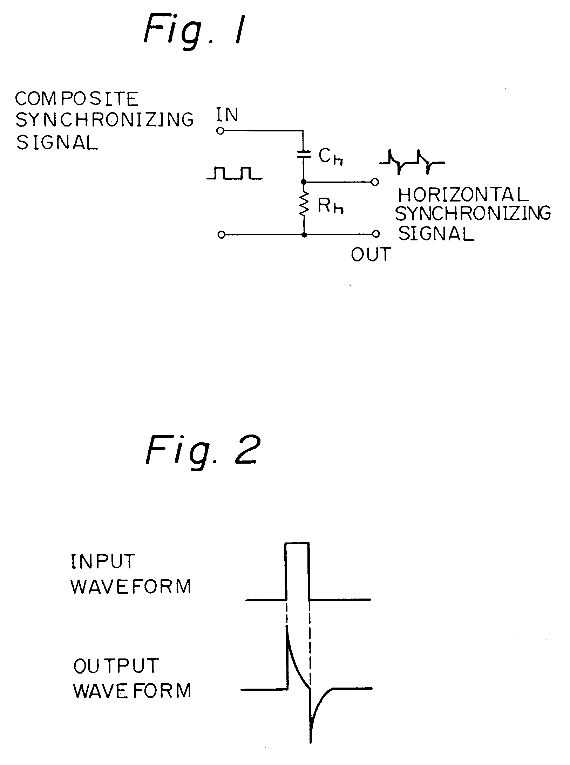

Figure 1 shows part of a conventional horizontal synchronous separation circuit, and Fig. 2 shows input and output waveforms of the circuit shown in Fig. 1. In Fig. 1, the horizontal synchronous separation circuit comprises a differential circuit having a capacitor Ch and resistor Rh, and a differential time constant of this circuit is set to pass only the horizontal synchronizing signal. For example, in the NTSC method, the horizontal synchronizing signal is 15.75 KHz. In Fig. 2, when a signal having a rectangular waveform is input to the terminal IN, a signal having a differential waveform can be obtained from the terminal OUT as the horizontal synchronizing signal. The vertical synchronizing signal is completely cut off in this circuit.

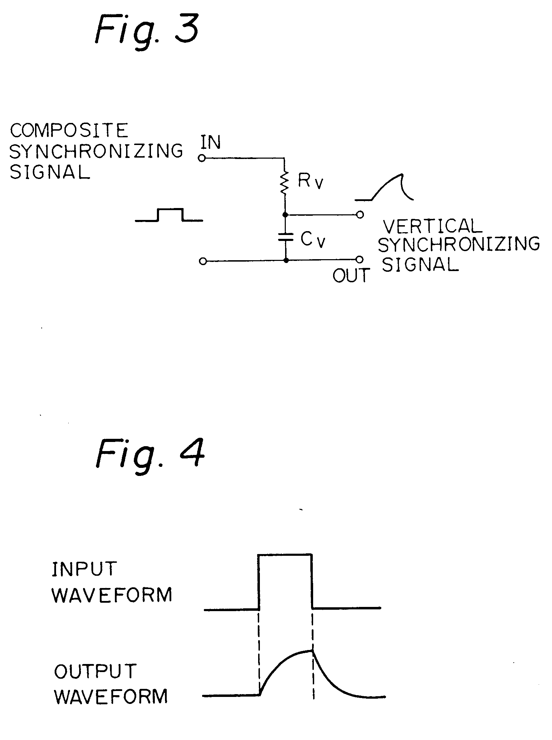

Figure 3 shows part of a conventional vertical synchronous separation circuit, and Fig. 4 shows input and output waveforms of the circuit shown in Fig. 3. In Fig. 3, the vertical synchronous separation circuit comprises an integrating circuit having a resistor Rv and capacitor Cv, and an integrating time constant of this circuit is set to a value such that the horizontal synchronizing signal can be suppressed and cut off. Further, the integrating time constant is set to a value such that attenuation of the vertical synchronizing signal having a predetermined frequency (60 Hz in the NTSC method) does not occur. In Fig. 4, when a signal having a rectangular waveform is input to the terminal IN, a signal having an integrating waveform can be obtained from the terminal OUT. The waveforms of the horizontal and vertical synchronizing signals are shaped by a comparator(not shown) and used as a trigger signal for horizontal and vertical deflections.

As explained above, the horizontal synchronous separation circuit is basically constituted by the differential circuit and the vertical synchronous separation circuit is constituted by the integrating circuit, both processing the analogue signal. Nevertheless, problems occur as explained hereinafter.

The resistors Rh, Rv and the capacitors Ch, Cv used in these circuits are passive electrical components, and accordingly, the electrical characteristics of the synchronous separation can vary considerably in accordance with the component tolerances and any changes in the components with the passage of time. For example, when the resistance value of the resistor Rh is slightly increased, the level of the differentiated horizontal synchronizing signal is lowered so that a precise horizontal synchronization cannot be obtained. Further, when the capacitance value Cv is slightly decreased, the vertical synchronization becomes unstable and it is difficult to suppress the horizontal synchronizing signal and large pulsative noise.

Further, these circuits should preferably be formed by integrated circuits(IC), to reduce costs, improve reliability, miniaturize the circuit, and simplify maintenance, but it is difficult to achieve the above objects with the analogue processing technique. Particularly, in the vertical synchronous separation circuit, since the vertical synchronous frequency is very low, as explained above(60 Hz in the NTSC method), a relatively large integration time constant must be used, and this large integration time constant is difficult to realize acceptably in an integrated circuit.

Accordingly, based on the above, an embodiment of the present invention is designed to provide a synchronous separation circuit, for deriving separate horizontal and the vertical synchronizing signals from the composite synchronizing signal, employing digital signal processing techniques.

A synchronous separation circuit embodying the present invention is explained in detail hereinafter.

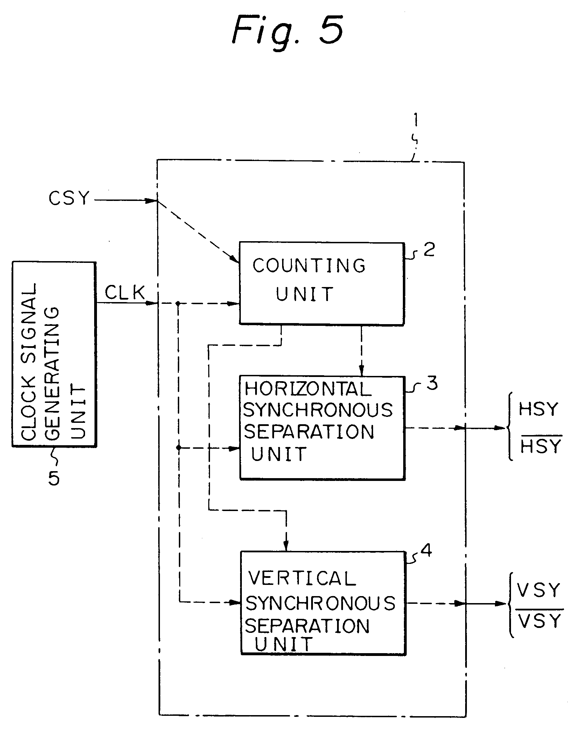

In Fig. 5, CSY is the composite synchronizing signal, CLK is the clock signal, HSY is the horizontal synchronizing signal, and VSY is the vertical synchronizing signal. Further, reference number 1 represents a synchronous separating circuit, 2 a counting unit, 3 a horizontal synchronous separation unit, 4 a vertical synchronous separation unit, and 5 a clock signal generating unit.

The above three main units 2, 3, and 4 are provided for obtaining the horizontal and vertical synchronizing signals by digital signal processing techniques. Namely, the synchronous separation circuit is basically constituted by the first means for generating the pulse width of the horizontal synchronizing signal, the second means for cutting off the equalizing pulse from the composite synchronizing signal, and the third means for generating the vertical synchronizing signal from the vertical synchronizing pulse of the composite synchronizing signal.

In more detail, the synchronous separation circuit 1 is constituted by; a counting unit 2 for counting pulses in a clock reference signal after detecting the leading edge of a pulse contained in the composite synchronizing signal; a horizontal synchronous separating unit 3 for providing a pulse of a fixed duration determined by counting a predetermined number of the clock pulses after detection of the said leading edge; and a vertical synchronous separating unit 4 for detecting when a pulse in the said composite synchronizing signal persists for a preset period, measured by operation of the said counting unit ( 2), and thereupon generating a vertical synchronizing pulse at an output separate from that of the said horizontal synchronizing signal.

The unit 5 generates the clock signal as a reference signal having a frequency higher than the frequency of the horizontal synchronizing signal.

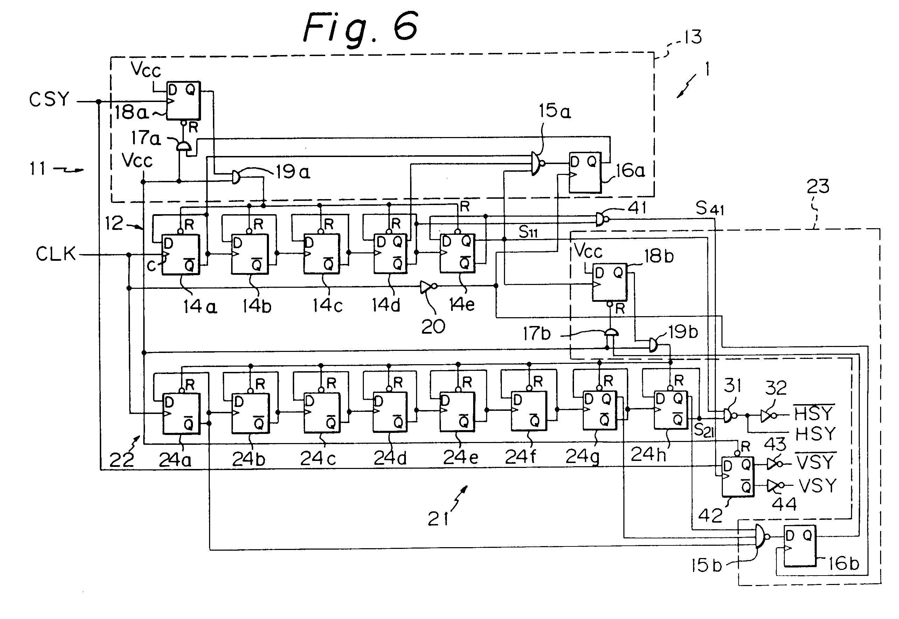

Figure 6 is a circuit diagram of the synchronous separation circuit according to an embodiment of the present invention. This circuit is used for separating the horizontal and vertical synchronizing signals from the composite synchronizing signal based upon the NTSC method. In Fig. 6, the synchronous separation circuit 1 is constituted by a counting circuit 11, a first frequency dividing counter 12, a first reset circuit 13, a supplementary counter 21, a second frequency dividing counter 22, and a second reset circuit 23. The first frequency dividing counter 12 and the first reset circuit 13 are contained in the counting circuit 11. The first frequency dividing counter 12 is constituted by a plurality of D-type flip-flop circuits(D-FF′s) 14a to 14e, whose respective inverted outputs Q̅ are fed back to the corresponding data inputs D. Accordingly, the D-FF′s operate as trigger flip-flop circuits (T-FF) (divide -by-two stages) in this circuit configuration.

The clock signal CLK is, for example, a color subcarrier Fsc (3.5795 MHz) contained in the composite video signal in the NTSC method and is input to a clock input terminal C of the D-FF 14a. Since this clock signal is used as the reference signal for the synchronization, a constant clock signal must be precisely generated. In this embodiment, the color subcarrier Fsc is utilized as the clock signal, since it is relatively stable. The D-FF′s 14a and 14e are connected in series and operate as a counter dividing the frequency of the clock signal CLK by a factor of 32.

The first reset circuit 13 is constituted by a NAND gate 15a having three input terminals, D-FF′s 16a and 18a, and two AND gates 17a and 19a. The inverted output Q̅ of the D-FF 14a, the output Q of the D-FF 14d, and the output Q of the D-FF 14e are input to corresponding input terminals of the NAND gate 15a, and the output of the NAND gate 15a is connected to the data input terminal D of the D-FF 16a. The clock signal CLK inverted by an inverter 20 is input to the clock input terminal of the D-FF 16a. The output Q of the D-FF 16a is input to one input terminal of the AND gate 17a and the power source Vcc is connected to the other input terminal of the AND gate 17a. The output of the AND gate 17a is input to the reset terminal R of the D-FF 18a. When the level of the reset terminal R is low, the D-FF 18a is reset and the level of the output Q becomes low.

The composite synchronizing signal CSY having a positive polarity is input to the clock input terminal C of the D-FF 18a and the power source Vcc is connected to the data input terminal D of the D-FF 18a. The output Q of the D-FF 18a is input to one input terminal of the AND gate 19a, and the power source Vcc is input to the other input terminal of the AND gate 19a. Since one input terminal of each of the AND gates 17a and 19a is connected to the power source Vcc, the outputs of these gates are always identical to their respective other inputs. The outputs of the AND gate 19a is connected to the reset input terminal R of each of the D-FF′s 14a to 14e, and when the reset input terminal R of the D-FF is low, each of the D-FF′s 14a to 14e is reset and the output Q becomes low. Further, the inverted output Q̅ becomes high.

When the reset input terminal R of each of the D-FF′s becomes high, the first frequency dividing counter 12 starts to count from a leading edge of the clock signal CLK. When all inputs of the NAND gate 15a become high, the first frequency dividing counter 12 is reset by the first reset circuit 13. Namely, when the first frequency dividing counter 12 counts up to 24, all inputs of the NAND gate 15a become high and the output thereof becomes low. The low level output of the NAND gate 15a is latched to the D-FF 16a at the trailing edge of the clock signal CLK and resets the D-FF 18a through the AND gate 17a.

Accordingly, when the output Q of the D-FF 18a becomes low, each of the D-FF′s 14a and 14e is reset, and when the output Q of the D-FF 18a is high, the first frequency dividing counter 12 again starts to count. In this case, when the high level of the data input D is latched at the leading edge of the composite synchronizing signal, the output Q becomes high and the first frequency dividing counter 12 starts to count. As explained above, the counter 11 starts to count from the leading edge of the composite synchronizing signal CSY. When the counter 11 counts up to 24, the counter 11 is reset and stops counting until the leading edge of the next composite synchronizing signal appears.

The supplementary counter 21 is constituted by the second frequency dividing counter 22 and the second reset counter 23. The second frequency dividing counter 22 is constituted by the D-type flip-flop(D-FF′s) circuits 24a to 24h. The inversion output Q̅ of each of the D-FF′s 24a to 24h is fed back to its own data input terminal D. Accordingly, each D-FF operates as a T-Type flip-flop(T-FF) circuit. The clock signal CLK is input to the clock input terminal C of the D-FF′s 24a to 24h connected in series, and accordingly, the second frequency dividing counter 22 operates as a counter dividing the clock signal frequency by 256.

The second reset circuit 23 has the same structure as the first reset circuit 13, and accordingly, 15b represents a NAND gate, 16b and 18b represent D-FF′s, and 17b and 19b represent AND gates. The second frequency dividing circuit 22 is reset by the second reset circuit 23 when all inputs of the AND gate 15b become high. In this case, the inversion output Q̅ of the D-FF 24a, the output Q of the D-FF 24g, and the output Q of the D-FF 24h are connected to the input terminals of the AND gate 15b, and accordingly, when the second frequency dividing circuit 22 counts up to 192, the D-FF′s 24a to 24h are reset. When the output Q of the D-FF 18b becomes high, the second frequency dividing circuit 22 starts to count. In this case, when the output of the counter 11, i.e., the output Q of the D-FF 14e, becomes high, the data input D of the D-FF 18b is latched to the high level and the second frequency dividing circuit 22 starts to count.

As explained above, the second frequency dividing circuit 22 starts to count on the leading edge of the output signal of the counter 11, and when the second frequency dividing circuit 22 has counted the clock signal up to 192, it is reset and stops counting the clock signal until the leading edge of the next output pulse of the counter 11 arrives.

The outputs of the counter 11 and the supplementary counter 21(inverted output Q̅ of the D-FF 24h) are input to the NAND gate 31. The output of the NAND gate 31 is the horizontal synchronizing signal HSY, and the inverted output H̅S̅Y̅ is obtained through the inverter 32. In this case, the supplementary counter 21 and the NAND gate 31 have the horizontal synchronous separation function.

The outputs of the D-FF′s 14d and 14e in the first frequency dividing counter 12 are input to the NAND gate 41, and the output of the NAND gate 41 is input to the clock input terminal C of the D-FF 42. The reset input terminal R of the D-FF 42 is connected to the power source Vcc. The composite synchronizing signal CSY is input to the data input terminal D of the D-FF 42; the output Q and the inversion output Q̅ of the D-FF 42 are connected to the input terminals of the inverters 43 and 44, and the outputs of the inverters 43 and 44 are the vertical synchronizing signals VSY and the inversion signal VSY. In this case, the NAND gate 41 and the D-FF 42 have the vertical synchronous separation function.

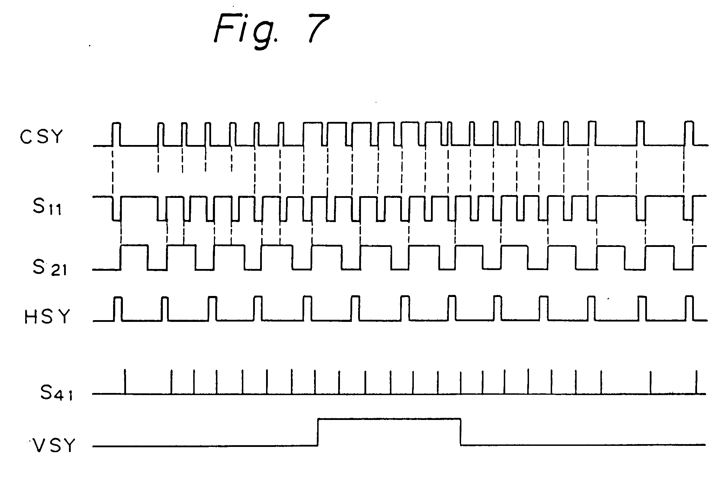

Figure 7 is a signal timing chart for explaining the operation of the circuit shown in Fig. 6. In Fig. 7, as explained above, CSY is the composite synchronizing signal, S₁₁ is the output of the counter 11, S₂₁ is the output of the supplementary counter 21, HSY is the horizontal synchronizing signal, S₄₁ is the output of the NAND gate 41, and VSY is the vertical synchronizing signal.

The signal timing of the composite synchronizing signal is already defined in detail in the NTSC method. For example, when the period of the horizontal scanning synchronizing pulse is 1 H, the pulse width of the horizontal synchronizing signal is 0.075 H, the pulse width of the cutting pulse(groove between the vertical synchronous phase) is 0.07 H, and the pulse width of the equalizing pulse is 0.4 H. Further, each period of the pulse train formed by the horizontal synchronizing signal, the cutting pulse and the equalizing pulse in the vertical blanking term is also defined by 0.5 H from the front edge of each pulse. Accordingly, when the counter starts to count reference signal clock pulses (having a frequency higher than that of the horizontal synchronizing signal) on detecting the leading edge of the composite synchronizing signal, it is possible to determine the respective positions of the horizontal synchronizing signal, the vertical synchronizing signal, and the supplementary pulse in terms of the count number.

When the composite synchronizing signal CSY is applied to the first reset circuit 13 in the counter 11, the first frequency dividing counter 12 is released from the reset state by the first reset circuit 13 at the leading edge of the composite synchronizing signal CSY, and the first frequency dividing counter 12 starts to count the clock signal CLK. When the first frequency dividing counter 12 has counted twenty-four pulses in the clock signal CLK, the first frequency dividing counter 12 is reset. The first frequency dividing counter 12 is then triggered again, to count 24 clock cycles, on the leading edge of the next pulse contained in the composite synchronizing signal CSY. At that time, the count of the counter 11 corresponds to 24 clock cycles of the clock signal CLK, and this value is approximately 0.1 H. Accordingly, the horizontal synchronizing signal and the supplementary pulse, each of duration 0.1H, are regenerated in an inverted form as the signal S₁₁ at the output of the counter 11 as shown in Fig. 7.

The second frequency dividing counter 22 operates in the same way as the first frequency dividing counter 12. When the clock input of the D-FF 18b becomes high, the second frequency dividing counter 22 is reset after a count of 192. Since the second frequency dividing counter 22 starts to count from the leading edge of the signal S₁₁, the output S₂₁ of the supplementary counter 21 is reset when a count of 192 is reached after the detection of that leading edge. Since the leading edge of the signal S₂₁ is synchronized with the trailing edge of the horizontal synchronizing signal and, the pulse width of the signal S₂₁ is 192 clock cycles(0.86 H), the equalizing pulse and the cutting pulse occur while the signal S₂₁ is high. Therefore, when the signal S₁₁ and S₂₁ are applied to the NAND gate 31, only the horizontal synchronizing signal HSY is output from the NAND gate 31.

Because the supplementary counter 21 starts to count from the leading edge of the signal S₁₁, in the event of a loss of synchronism the count may be initiated by the supplementary pulse. In this case, since the second frequency dividing counter 22 will not stop counting until a count of 196 is reached, the counting operation will not have been completed before the next horizontal synchronizing signal appears.

However, when the vertical blanking term is finished, because the supplementary pulse does not follow, the counter starts to count from the leading edge of the horizontal synchronizing signal, so that normal operation is restored after the above operation.

The output S₄₁ of the NAND gate 41 triggers the D-FF 42 when the inverted output Q̅ of each of the D-FF′s 14d and 14e is low. Namely, the signal S₄₁ becomes high at only half a cycle of the clock signal CLK just before the trailing edge of the horizontal synchronizing signal HSY provided by the NAND gate 31. At that time, since the pulse width of the signal S₁₁ is 0.1 H, the horizontal synchronizing pulse, equalizing pulse, and cutting pulse contained in the composite synchronizing signal do not occur at the instant (sampling instant) at which the signal S₄₁ becomes high. Accordingly, when the composite synchronizing signal input to the data terminal D of the D-FF 42 is sampled by the signal S₄₁ , it is possible to generate a continuous high level pulse of the correct duration as the vertical synchronizing signal VSY from the output of the D-FF 42.

Thus, the pulse width of the generated vertical synchronizing pulse is substantially equal to the interval from the leading edge of the first vertical synchronizing pulse in the composite synchronizing signal to the leading edge of the first narrow pulse following that first vertical synchronizing pulse. The start of the generated vertical synchronizing pulse is, however, slightly delayed with respect to the leading edge of the first vertical synchronizing pulse.

As explained above, the horizontal synchronizing signal and the vertical synchronizing signal are generated using digital signal processing techniques, without using a differential circuit and an integrating circuit, and accordingly the IC circuit can be easily and inexpensively manufactured, the reliability improved, the circuit miniturized, and maintenance simplified.

In the above embodiment, although the explanations are given with reference to the composite synchronizing signal of the NTSC method, a digital synchronous separation circuit embodying the present invention can be easily applied to the PAL method and the SECAM method.

Further, although an asynchronous type counter is provided for the first and second counters 12 and 22, a synchronous type counter can be used instead.

Still further, although the counter 11 and the supplementary counter 21 are independently provided in the synchronous separation circuit, the output of the D-FF′s 24d and 24e of the supplementary counter 21 can be utilized, and in this case, only one counter need be provided in the synchronous separation circuit, and thus the costs are reduced and the integration circuit is further miniaturized.

Still further, although the color subcarrier Fsc is used as the clock signal CLK in this embodiment, an oscillator can be provided for generating the clock signal CLK, and in this case, the frequency of the clock signal is set to a value higher than that of the horizontal synchronizing signal.

## Claims

1. Digital video signal processing circuitry, for deriving respective horizontal and vertical synchronizing signals from a composite synchronizing signal, comprising:
a clock signal generator for generating a train of clock pulses (CLK) of a frequency higher than the horizontal synchronizing signal frequency;
a pulse detector (18a) arranged to detect a horizontal synchronizing pulse in the said composite synchronizing signal (CSY) and thereupon to trigger counting means (12) of the circuitry, to commence counting a first predetermined number of the said clock pulses, and also to trigger a first output stage (31) of the circuitry so as to cause that stage to generate a horizontal synchronizing pulse (HSY) which is terminated on completion of the said counting; and
a pulse discriminator (42) arranged to determine whether or not pulses in the said composite synchronizing signal are vertical synchronizing pulses of pulse width equal to or greater than a selected minimum value and to cause a second output stage (44) of the circuitry to generate a vertical synchronizing pulse (VSY) at an output separate from that of the said first output stage (31);
characterised in that the circuitry further includes a sampling pulse generator (41) arranged to generate a sampling pulse (S₄₁) in response to each pulse in the said composite synchronizing signal, each sampling pulse being delayed with respect to its corresponding pulse in the composite synchronizing signal by a preset period determined by operation of the said counting means and being employed to determine a sampling instant at which the said composite synchronizing signal is sampled, said sampling instant occurring after the end of the said corresponding pulse if that pulse is not one of the said vertical synchronizing pulses in the composite signal but before the said end if that pulse is one of those vertical synchronizing pulses; and
in that the said pulse discriminator (42) is arranged to determine, on the basis of whether or not the said corresponding pulse in the composite synchronizing signal is still persisting at the sampling instant concerned, whether or not the said corresponding pulse is one of the said vertical synchronizing pulses, and to cause the said second output stage (44) of the circuitry to generate a single vertical synchronizing pulse (VSY) of a pulse width substantially equal to the interval from the leading edge of the first vertical synchronizing pulse, in the composite synchronizing signal, that follows a narrow pulse therein, of a pulse width less than the said selected minimum value, to the leading edge of the first such narrow pulse following that first vertical synchronizing pulse in the composite synchronizing signal.

2. Digital video signal processing circuitry as claimed in claim 1, wherein the said pulse discriminator includes a D-type flip-flop circuit (42) having a clock input to which the sampling pulses (S₄₁) are applied and a data input (D) to which the said composite synchronizing signal is applied.

3. Digital video signal processing circuitry as claimed in claim 1 or 2, wherein the said counting means include:
a first frequency dividing counter (12) connected to receive the said clock pulses and operable to generate a series of first pulses (S₁₁) by counting the received clock pulses, each first pulse commencing at a leading edge of a pulse in the composite synchronizing signal and terminating when the count value in the first frequency dividing counter reaches the said first predetermined number;
a second frequency dividing counter (22) connected to receive the said clock pulses and operable to generate a series of second pulses (S₂₁) by counting the received clock pulses, each second pulse commencing upon termination of one of the said first pulses and terminating when the count value in the second frequency dividing counter reaches a second predetermined number greater than the said first predetermined number;
a first reset circuit (13) arranged to reset the count value in the first frequency dividing counter (12) when that count value reaches the said first predetermined number; and
a second reset circuit (23) arranged to reset the count value in the second frequency dividing counter (22) when that count value reaches the said second predetermined number;
the said first output stage (31) being prevented from generating the said horizontal synchronizing pulse (HSY) in response to any one of the said first pulses (S₁₁) that coincides with one of the said second pulses (S₂₁).

4. Digital video signal processing circuitry as claimed in claim 3, wherein the said first frequency dividing counter (12) comprises a first plurality of D-type flip-flop circuits (14a, 14b,... 14e) connected in series to form T-type flip-flop circuits.

5. Digital video signal processing circuitry as claimed in claim 4, wherein the said second frequency dividing counter (22) comprises a second plurality of D-type flip-flop circuits (24a, 24b,... 24g) connected in series to form T-type flip-flop circuits, the number of D-type flip-flop circuits in the said second plurality being greater than in the said first plurality.

## Patentansprüche

1. Digitale Videosignalverarbeitungsschaltung zum Ableiten von jeweiligen horizontalen und vertikalen Synchronisierungssignalen aus einem zusammengesetzten Synchronisierungssignal, umfassend:
einen Taktsignalgenerator zum Erzeugen eines Zuges von Taktimpulsen (CLK) mit einer Frequenz, die höher ist als die horizontale Synchronisierungssignalfrequenz;
einen Impulsdetektor (18a), der angeordnet ist, um einen horizontalen Synchronisierungsimpuls in dem zusammengesetzten Synchronisierungssignal (CSY) zu erfassen und daraufhin eine Zähleinrichtung (12) der Schaltung auszulösen, um das Zählen einer ersten vorbestimmten Anzahl der Taktimpulse zu beginnen, und ebenfalls eine erste Ausgangsstufe (31) der Schaltung auszulösen, um so diese Stufe zu veranlassen, einen horizontalen Synchronisierungsimpuls (HSY) zu erzeugen, der bei Vollendung des Zählvorganges beendet wird; und
einen Impulsdiskriminator (42), der vorgesehen ist, um zu bestimmen, ob Impulse in dem zusammengesetzten Synchronisierungssignal vertikale Synchronisierungsimpulse mit einer Impulsbreite sind, die gleich einem oder größer als ein ausgewählter Mindestwert ist, oder nicht, und um eine zweite Ausgangsstufe (44) der Schaltung zu veranlassen, einen vertikalen Synchronisierungsimpuls (VSY) an einem Ausgang zu erzeugen, der von dem der ersten Ausgangsstufe (31) getrennt ist;
dadurch gekennzeichnet, daß die Schaltung ferner einen Abtastimpulsgenerator (41) enthält, der vorgesehen ist, um einen Abtastimpuls (S₄₁) ansprechend auf jeden Impuls in dem zusammengesetzten Synchronisierungssignal zu erzeugen, wobei jeder Abtastimpuls bezüglich seinem entsprechenden Impuls in dem zusammengesetzten Synchronisierungssignal um einen voreingestellten Zeitraum verzögert ist, der durch den Betrieb der Zähleinrichtung bestimmt ist und verwendet wird, um einen Abtastmoment zu bestimmen, an dem das zusammengesetzte Synchronisierungssignal abgetastet wird, welcher Abtastmoment nach dem Ende des entsprechenden Impulses auftritt, wenn dieser Impuls nicht einer der vertikalen Synchronisierungsimpulse in dem zusammengesetzten Synchronisierungssignal ist, aber vor dem Ende, wenn dieser Inpuls einer jener vertikalen Synchronisierungsimpulse ist; und
dadurch, daß der Impulsdiskriminator (42) vorgesehen ist, um auf der Basis, ob der entsprechende Impuls in dem zusammengesetzten Synchronisierungssignal immer noch an dem betreffenden Abtastmoment andauert oder nicht, zu bestimmen, ob der entsprechende Impuls einer der vertikalen Synchronisierungsimpulse ist oder nicht, und um zu veranlassen, daß die zweite Ausgangsstufe (44) der Schaltung einen einzelnen vertikalen Synchronisierungsimpuls (VSY) mit einer Impulsbreite erzeugt, die im wesentlichen gleich dem Intervall von der Vorderflanke des ersten vertikalen Synchronisierungsimpulses in dem zusammengesetzten Synchronisierungssignal ist, der in diesem einem schmalen Impuls folgt, mit einer Impulsbreite, die geringer ist als der ausgewählte Mindestwert, bis zu der Vorderflanke des ersten derartigen schmalen Impulses, der diesem ersten vertikalen Synchronisierungsimpuls in dem zusammengesetzten Synchronisierungssignal folgt.

2. Digitale Videosignalverarbeitungsschaltung nach Anspruch 1, bei der der Impulsdiskriminator eine Flip-Flop-Schaltung (42) des D-Typs enthält, die einen Takteingang hat, an den die Abtastimpulse (S₄₁) angelegt werden, und einen Dateneingang D, an den das zusammengesetzte Synchronisierungssignal angelegt wird.

3. Digitale Videosignalverarbeitungsschaltung nach Anspruch 1 oder 2, wobei die Zähleinrichtungen umfassen:
einen ersten Frequenzteilungszähler (12), der zum Empfangen des ersten Taktimpulses angeschlossen ist, und zum Erzeugen einer Reihe von ersten Impulsen (S₁₁) durch Zählen der erhaltenen Taktimpulse betätigbar ist, wobei jeder erste Impuls an einer Vorderflanke eines Impulses in dem zusammengesetzten Synchronisierungssignal beginnt und dann endet, wenn der Zählwert in dem ersten Frequenzteilungszähler die erste vorbestimmte Zahl erreicht;
einen zweiten Frequenzteilungszähler (22), der zum Empfang des Taktimpulses angeschlossen ist und zum Erzeugen einer Reihe von zweiten Impulsen (S₂₁) durch Zählen der empfangenen Taktimpulse betätigbar ist, wobei jeder zweite Impuls bei Beendigung eines der ersten Impulse beginnt und dann endet, wenn der Zählwert in dem zweiten Frequenzteilungszähler eine zweite vorbestimmte Zahl erreicht, die größer ist als die erste vorbestimmte Zahl;
eine erste Rückstellschaltung (13), die zum Rückstellen des Zählwertes des ersten Frequenzteilungszählers (12) vorgesehen ist, wenn der Zählwert die erste vorbestimmte Zahl erreicht; und
eine zweite Rückstellschaltung (23), die zum Rückstellen des Zählwertes in dem zweiten Frequenzteilungszähler (22) vorgesehen ist, wenn dieser Zählwert die zweite vorbestimmte Zahl erreicht;
welche erste Ausgangsstufe (31) daran gehindert wird, den horizontalen Synchronisierungsimpuls (HSY) ansprechend auf einen der ersten Impulse (S₁₁) zu erzeugen, der mit einem der zweiten Impulse (S₂₁) zusammenfällt.

4. Digitale Videosignalverarbeitungsschaltung nach Anspruch 3, in der der erste Frequenzteilungszähler (12) eine erste Vielzahl von Flip-Flop-Schaltungen des D-Typs (14a, 14b, ... 14e) enthält, die in Reihe zur Bildung von Flip-Flop-Schaltungen des T-Typs verbunden sind.

5. Digitale Videosignalverarbeitungsschaltung nach Anspruch 4, bei der der zweite Frequenzteilungszähler (22) eine zweite Vielzahl von Flip-Flop-Schaltungen des D-Typs (24a, 24b ... 24g) umfaßt, die zur Bildung von Flip-Flop-Schaltungen des T-Typs in Reihe verbunden sind, wobei die Anzahl der Flip-Flop-Schaltungen des D-Typs in der zweiten Vielzahl größer ist als in der ersten Vielzahl.

## Revendications

1. Circuits de traitement numérique de signal vidéo, pour obtenir, à partir d'un signal de synchronisation composite, des signaux de synchronisation horizontale et verticale respectifs, comprenant :
un générateur de signal d'horloge pour produire un train d'impulsions d'horloge (CLK) d'une fréquence plus élevée que la fréquence de signal de synchronisation horizontale ;
un détecteur d'impulsion (18a) agencé pour détecter une impulsion de synchronisation horizontale dans ledit signal de synchronisation composite (CSY) et pour déclencher alors un moyen de comptage (12) des circuits, pour qu'il commence à compter un premier nombre prédéterminé desdites impulsions d'horloge, et également pour déclencher un premier étage de sortie (31) des circuits de façon à faire que l'étage produise une impulsion de synchronisation horizontale (HSY) qui se termine à la fin dudit comptage ; et
un discriminateur d'impulsions (42) agencé pour déterminer si des impulsions dans ledit signal de synchronisation composite sont, ou non, des impulsions de synchronisation verticale d'une largeur d'impulsion égale ou supérieure à une valeur minimale choisie et pour faire qu'un second étage de sortie (44) des circuits produise une impulsion de synchronisation verticale (VSY), à une sortie distincte de celle dudit premier étage de sortie (31) ;
caractérisé en ce que les circuits comprennent en outre un générateur d'impulsion d'échantillonnage (41) agencé pour produire une impulsion d'échantillonnage (S₄₁) en réponse à chaque impulsion dudit signal de synchronisation composite, chaque impulsion d'échantillonnage étant retardée, par rapport à l'impulsion qui lui correspond dans le signal de synchronisation composite, d'une période préréglée déterminée par le fonctionnement dudit moyen de comptage et étant utilisée pour déterminer un instant d'échantillonnage, après la fin de ladite impulsion correspondante si cette impulsion ne fait pas partie desdites impulsions de synchronisation verticale du signal composite, mais avant ladite fin si cette impulsion fait partie de ces impulsions de synchronisation verticale, auquel ledit signal de synchronisation composite est échantillonné ;
et en ce que ledit discriminateur d'impulsions (42) est agencé pour déterminer, sur la base du fait que ladite impulsion correspondante du signal de synchronisation composite persiste encore, ou non, à l'instant d'échantillonnage concerné, si ladite impulsion correspondante fait partie, ou non, desdites impulsions de synchronisation verticale, et pour faire que ledit second étage de sortie (44) des circuits produise une impulsion de synchronisation verticale (VSY) unique d'une largeur d'impulsion sensiblement égale à l'intervalle allant du front avant de la première impulsion de synchronisation verticale du signal de synchronisation composite qui suit une impulsion étroite de celui-ci, d'une largeur d'impulsion plus petite que ladite valeur minimale choisie, jusqu'au front avant de cette première impulsion étroite qui suit cette première impulsion de synchronisation verticale du signal de synchronisation composite.

2. Circuits de traitement numérique de signal vidéo selon la revendication 1, dans lesquels ledit discriminateur d'impulsions comprend un circuit bascule de type D (42) ayant une entrée d'horloge à laquelle les impulsions d'échantillonnage (S₄₁) sont appliquées et une entrée de donnée (D) à laquelle ledit signal de synchronisation composite est appliqué.

3. Circuits de traitement numérique de signal vidéo selon la revendication 1 ou 2, dans lesquels ledit moyen de comptage comprend :
un premier compteur diviseur de fréquence (12) connecté pour recevoir lesdites impulsions d'horloge et servant à produire une série de premières impulsions (S₁₁) en comptant les impulsions d'horloge reçues, chaque première impulsion commençant au droit du front avant d'une impulsion du signal de synchronisation composite et se terminant lorsque la valeur comptée dans le premier compteur diviseur de fréquence atteint ledit premier nombre prédéterminé ;
un second compteur diviseur de fréquence (22) connecté pour recevoir lesdites impulsions d'horloge et servant à produire une série de secondes impulsions (S₂₁) en comptant les impulsions d'horloge reçues, chaque seconde impulsion commençant à la fin de l'une desdites premières impulsions et se terminant lorsque la valeur comptée dans le second compteur diviseur de fréquence atteint un second nombre prédéterminé plus grand que ledit premier nombre prédéterminé ;
un premier circuit de remise à zéro (13) agencé pour remettre à zéro la valeur comptée dans le premier compteur diviseur de fréquence (12) lorsque cette valeur comptée atteint ledit premier nombre prédéterminé ; et
un second circuit de remise à zéro (23) agencé pour remettre à zéro la valeur comptée dans le second compteur diviseur de fréquence (22) lorsque cette valeur comptée atteint ledit second nombre prédéterminé ;
ledit premier étage de sortie (31) étant empêché de produire ladite impulsion de synchronisation horizontale (HSY) en réponse à l'une quelconque desdites premières impulsions (S₁₁) qui coïncide avec l'une desdites secondes impulsions (S₂₁).

4. Circuits de traitement numérique de signal vidéo selon la revendication 3, dans lesquels ledit premier compteur diviseur de fréquence (12) comprend une première pluralité de circuits bascules de type D (14a, 14b, ..., 14e) connectés en série pour former des circuits bascules de type T.

5. Circuits de traitement numérique de signal vidéo selon la revendication 4, dans lesquels ledit second compteur diviseur de fréquence (22) comprend une seconde pluralité de circuits bascules de type D (24a, 24b, ..., 24g) connectés en série pour former des circuits bascules de type T, le nombre des circuits bascules de type D de ladite seconde pluralité étant plus grand que celui de ladite première pluralité.
